Europäisches Patentamt

European Patent Office

Office européen des brevets

(11) Publication number: **0 064 455**
**B1**

# EUROPEAN PATENT SPECIFICATION

(45) Date of publication of patent specification: **23.10.85**

(51) Int. Cl.⁴: **B 29 C 45/12**

(21) Application number: **82400750.4**

(22) Date of filing: **27.04.82**

(54) Tandem transfer press.

(30) Priority: **27.04.81 US 258111**

(43) Date of publication of application:
**10.11.82 Bulletin 82/45**

(45) Publication of the grant of the patent:
**23.10.85 Bulletin 85/43**

(84) Designated Contracting States:
**DE FR GB IT NL**

(56) References cited:
**CH-A- 625 461**
**DE-U-7 307 110**
**FR-A-1 304 803**
**GB-A-1 337 384**
**GB-A-1 554 062**
**US-A-3 671 162**
**US-A-3 880 560**

(73) Proprietor: **FAIRCHILD CAMERA &**
**INSTRUMENT CORPORATION**
**464 Ellis Street**
**Mountain View California 94042 (US)**

(72) Inventor: **Sahakian, Vahak K.**
**27621 Via Cerro Gordo**
**Los Altos Hills California 94022 (US)**

(74) Representative: **Chareyron, Lucien et al**
**Schlumberger Limited Service Brevets c/o Giers**
**12, place des Etats Unis B.P. 121**
**F-92124 Montrouge Cédex (FR)**

Courier Press, Leamington Spa, England.

## Description

Background of the Invention
*1. Field of the Invention*

The present invention relates generally to transfer molding of plastic products and particularly to apparatus for the high capacity transfer molding of plastic semiconductor packages.

2. Brief Description of the Prior Art

According to a conventional transfer molding technique, plastic products are molded utilizing a hydraulic transfer press and a precisely tooled aperture plate mold.

The transfer press includes a stationary upper platen and a movable lower platen. A double-acting hydraulic closing ram is attached to the lower platen to either advance the lower platen toward the upper platen or withdraw it from the upper platen as desired.

The aperture plate mold comprises a top mold half which is bolted to the lower surface of the upper platen and a bottom mold half which is bolted to the upper surface of the lower platen. The mold further includes two removable aperture plates which are insertable between the mold halves. Each aperture plate is tooled such that when the two plates are brought together, the pair defines precise cavities, the dimensions of which correspond to the dimensions of the desired plastic products.

A molding compound transfer cylinder is mounted on the upper platen for transferring pre-heated thermoplastic molding compound to a runner/gate network which is formed in the lower surface of the top mold half. The runner/gate network is formed such that when the mold is closed by the action of the press, the network is in flow communication with the cavities defined by the aperture plates. Thus, when the transfer cylinder is actuated, pre-heated molding compound flows through the network and into each cavity to form the plastic products.

In a particular application of the above-described technique, semiconductor devices mounted on lead frames are encapsulated in thermoplastic packages. Typically, semiconductor devices are mounted on lead frame strips which are then loaded into the aperture plates such that each semiconductor device corresponds to an aperture plate cavity. The loaded plates are then inserted into the transfer press and the closing ram is actuated to sealingly engage the plates between the mold halves. Pre-heated thermoplastic molding compound is then transferred from a molding compound pot formed in the upper platen to each of the aperture plate cavities. The sealed mold is maintained at appropriate conditions of temperature and compressive pressure for a time required for the thermoplastic to set. Upon completion of setting, the mold is opened by actuating the closing ram to withdraw the lower mold half. The aperture plates are then removed, reloaded and reinserted into the press and the sequence is repeated.

A critical feature of a transfer molding press is adequate clamp tonnage. The force applied by the closing ram to seal the mold must be sufficient to hold the aperture plates together and to counteract the pressure produced by encapsulant moving into the mold. That is, to prevent leakage of molding compound during the molding process, the force applied by the closing ram must be at least equal to the sum total cross-sectional area of the cavities, the runner/gate network and the molding compound transfer pot multiplied by the pressure applied by the molding compound transfer cylinder.

Other molding techniques such as injection molding are known. For example, British patent GB—A—1337384 (G. Ward) discloses an injection molding machine having a runner block mounted between two platens, one of the platens being forced towards the other to clamp up two sets of die members disposed between the runner block and the platens, each set defining a mold cavity. The runner block has a manifold duct whereby molten plastics material will be injected into the mold cavities. This technique is specifically related to injection molding and does not disclose transfer molding for encapsulating semiconductor devices.

Summary of the Invention

A general object of the present invention is to provide tandem transfer press which simultaneously utilizes at least two molds to produce plastic products. The clamp tonnage required for closing the tandem press is the same as that required for conventional single-mold presses. Thus, for a given floor space and size of press, the tandem transfer press of the present invention at least doubles the output of plastic products produced per press cycle without necessitating an increase in clamp tonnage.

This and other objects are attained, in accordance with the invention by a tandem transfer press for encapsulating semiconductor devices as recited in claim 1.

Brief Description of the Drawings

Fig. 1 is a section view of the transfer press of the present invention taken along line 1—1 of Fig. 2.

Fig. 2 is a section view of the transfer press of the present invention taken along line 2—2 of Fig. 1.

Fig. 3 is an elevation view of an alternate embodiment of the transfer press of the present invention.

Fig. 4 is a schematic illustration of a second alternative embodiment of the transfer press of the present invention.

Detailed Description of the Preferred Embodiment

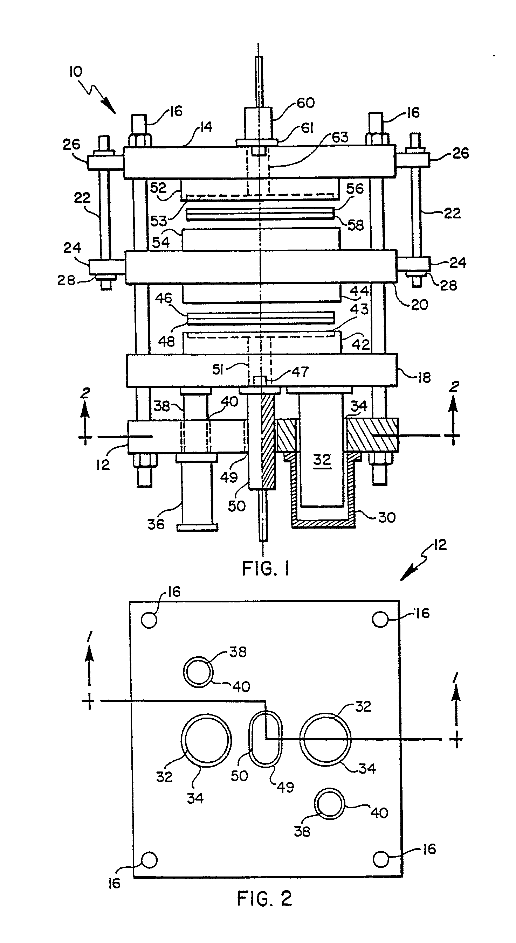

Fig. 1 shows a tandem transfer press 10 which includes a frame comprising a cylinder platen 12 and a fixedly mounted head platen 14, the head platen 14 being fixedly spaced apart from the cylinder platen 12. In the illustrated embodiment, the cylinder platen 12 and the head platen 14 are maintained in fixed spaced apart relationship by tie rods 16 which comprise part of the frame. The orientation of the press is not critical to the invention. While it is illustrated as a vertical press, it can also be a horizontal press.

As shown in Fig. 1, a translatable moving platen 18 is slidably mounted on the frame between the cylinder platen 12 and the head platen 14. A translatable floating die plate 20 is also slidably mounted between the moving platen 18 and the head platen 14. In the illustrated embodiment, the floating die plate 20 is slidably suspended from the head platen 14 by means of four hanger rod assemblies, one of which is located at each corner of the press 10. Each hanger rod assembly comprises a hanger rod 22 attached to both the floating die plate 20 and the head platen 14 by hanger rod brackets 24 and 26, respectively. A support washer 28 attached to the hanger rod 22 below the bracket 24 limits the lower travel of the floating die plate 20.

A closing means for closing the press 10 in a manner described in detail below is mounted on the cylinder platen 12. In the illustrated embodiment, the closing means comprises a pair of high speed, double-acting exterior jack rams 36 and a pair of clamp cylinders 30. The pistons 38 of the jack rams 36 extend through openings 40 in the cylinder platen 12 and are attached to the lower surface of the moving platen 18. Similarly, the pistons 32 of the clamp cylinders 30 extend through openings 34 in the cylinder platen 12 and are attached to the lower surface of the moving platen 18.

A first mold having one or more cavities formed therein is disposed between the moving platen 18 and the floating die plate 20. In the preferred embodiment, and as shown in Fig. 1, the first mold is an aperture plate mold which includes a bottom mold half 42 mounted on the upper surface of the moving platen 18 and having a runner/gate network 43 formed therein. The first mold further includes a top mold half 44 mounted on the lower surface of the floating die plate 20 and a pair of removable aperture plates 46, 48 positioned between the bottom mold half 42 and the upper mold half 44. The aperture plates 46, 48 are machined such that when the plates are sealingly engaged, they define a matrix of interior cavities, each cavity corresponding to the dimensions of a desired plastic product. In the preferred embodiment, each cavity corresponds to the dimensions of a desired plastic package for a semiconductor device; a semiconductor device mounted on a lead frame being positioned in each cavity.

An aperture plate mold of the type just described and which may be utilized in accordance with the teachings of the present invention is manufactured by Dusan Tools, Inc. and is described in further detail in "Successful Encapsulation: Molds and Presses", Semiconductor International, December 1980, p. 42.

A first molding compound transfer cylinder 50 extends through an opening 49 in the cylinder platen 12 and is mounted on the lower surface of the moving platen 18. The plunger 47 of the transfer cylinder 50 is extendable into a first molding compound transfer pot 51 formed in the moving platen 18 for transferring molding compound from the pot 51 into the runner/gate network 43 of lower mold half 42. As explained below, when the aperture plates 46, 48 are sealingly engaged between the mold halves 42, 44, the runner/gate network 43 is in flow communication with the cavities of the aperture plates 46, 48 for providing pre-heated thermoplastic molding compound thereto.

A second mold having one or more cavities formed therein is positioned between the floating die plate 20 and the head platen 14. In the preferred embodiment, and as shown in Fig. 1, the second mold is also an aperture plate mold of the type described above which includes a top mold half 52 mounted on the lower surface of the head platen 14 and having a runner/gate network 53 formed therein. The second mold further includes a lower mold half 54 mounted on the upper surface of the floating die plate 20 and a pair of removable aperture plates 56, 58 positioned between the top mold half 52 and the lower mold half 54.

A second transfer cylinder 60 is mounted on the upper surface of the head platen 14. The plunger 61 of the transfer cylinder 60 is extendable into a second molding compound transfer pot 63 formed in the head platen 14 for transferring molding compound from the pot 63 into the runner/gate network 53 of the top mold half 52. As explained below, when the aperture plates 56, 58 are sealingly engaged between the mold halves 52, 54, the runner/gate network 53 is in flow communication with cavities of the aperture plates 56, 58 for providing pre-heated thermoplastic molding compound thereto.

In operation of the tandem transfer press 10 illustrated in Figs. 1 and 2, the exterior jack rams 36 are actuated to advance the moving platen 18 toward the head platen 14 at a relatively high speed. As the moving platen 18 advances, the aperture plates 46, 48 become engaged between the halves 42, 44 of the first mold. Continued action of the jack rams 36 causes both the moving platen 18 and the floating die plate 20 to move upwardly in tandem until the aperture plates 56, 58 become engaged between the halves 52, 54 of the second mold. The clamp cylinders 30 are then actuated as well to complete closing of the press such that the first mold is sealingly engaged between the moving platen 18 and the floating die plate 20 and the second mold is sealingly engaged between the floating die plate 20 and the head platen 14. First and second transfer cylinders 50 and 60, respectively, are then actuated to transfer pre-heated thermoplastic molding compound via the runner/gate networks 43, 53 into the first and second molds, respectively. The closed press is then maintained at desired conditions of temperature and pressure until setting of the thermoplastic encapsulant is completed. When setting is completed, the clamp cylinders 30 are deactivated and the double-acting jack rams 36 are reversed to withdraw the moving platen 18 from the head platen 14 such that the two aperture plate sets 46, 48 and 56, 58 may be removed from the press. The two aperture plate sets are then reloaded and reinserted into the press and the sequence is repeated.

Since the force applied by the closing means to seal the first mold between the moving platen 18 and the floating die plate 20 is the same force utilized to seal the second mold between the floating die plate 20 and the head platen 14, twice as many unit products may be produced according to the present invention utilizing the same press clamp tonnage as that required for conventional single mold presses.

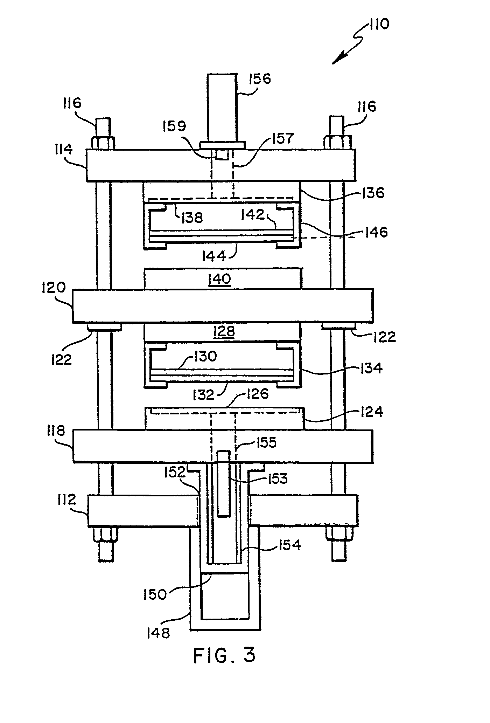

An alternative embodiment of the present invention, which emphasizes coaxial clamping and transfer action, is illustrated in Fig. 3.

Fig. 3 shows a tandem transfer press 110 which includes a frame comprising a cylinder platen 112 and a head platen 114, the head platen 114 being fixedly spaced apart from the cylinder platen 112 by tie rods 116 which comprise part of the frame. A moving platen 118 is slidably mounted on the frame between the cylinder platen 112 and the head platen 114. A floating die plate 120 is also slidably mounted between the moving platen 118 and the head platen 114. In the embodiment illustrated in Fig. 3, die plate stops 122 limit the lower travel of the floating die plate 120.

A first aperture plate mold similar to that described above with respect to Figs. 1 and 2 is positioned between the moving platen 118 and the floating die plate 120. The first mold comprises a bottom mold half 124 mounted on the upper surface of the moving platen 118 and having a runner/gate network 126 formed therein. A top mold half 128 is mounted on the lower surface of the floating platen 120 and a pair of aperture plates 130, 132 are positioned between the bottom mold half 124 and the top mold half 128. In the embodiment illustrated in Fig. 3, the aperture plates 130, 132 are suspended within an aperture plate rack 134 which is mounted on the periphery of the lower surface of the top mold half 128.

A second aperture plate mold similar to the first mold is positioned between the floating die plate 120 and the head platen 114. The second mold comprises a top mold half 136 mounted on the lower surface of the head platen 114 and having a runner/gate network 138 formed therein. A bottom mold half 140 is mounted on the upper surface of the floating die plate 120 and a pair of aperture plates 142, 144 are positioned between the top mold half 136 and the bottom mold half 140 by a second aperture plate rack 146.

In contrast with the embodiment illustrated in Figs. 1, and 2, however, the alternative embodiment illustrated in Fig. 3 utilizes a closing means which comprises a single, axially-mounted, double acting hydraulic ram 148 mounted on the lower surface of the cylinder platen 112. The piston 150 of the closing ram 148 extends through an opening 152 in the cylinder platen and is attached to the lower surface of the moving platen 118.

Coaxially positioned within the piston 150 and mounted on the lower surface of the moving platen 118 is a first molding compound transfer cylinder 154. The plunger 153 of the first transfer cylinder 154 is extendable into a first molding compound transfer pot 155 formed in the moving platen 118 for transferring molding compound from the pot 155 into the runner/gate network 126 of the bottom mold half 124.

A second molding compound transfer cylinder 156 is mounted on the upper surface of the head platen 114. The plunger 159 of the second transfer cylinder 156 is extendable into a second molding compound transfer pot 157 formed in the head platen 114 for transferring molding compound from the pot 157 into the runner/gate network 138 of the top mold half 136.

In operating the tandem transfer press 110, the hydraulic closing ram 148 is actuated to advance the moving platen 118 toward the head platen 114. As the moving platen 118 advances toward the head platen 114, the first pair of aperture plates 130, 132 becomes engaged between the bottom mold half 124 and the top mold half 128. Continuing action of the ram 148 moves both the moving platen 118 and the floating die plate 120 in tandem until the second pair of aperture plates 142, 144 becomes engaged between the bottom mold half 140 and the top mold half 136. Further pressure is then applied by the closing ram 148 such that the first mold is sealingly engaged between the moving platen 118 and the floating die plate 120 and the second mold is sealingly engaged between the floating die plate 120 and the head platen 114. The first and second transfer cylinders 154, 156 are then actuated to transfer molding compound into the first and second molds, respectively. The closed press is maintained at desired conditions of temperature and pressure until setting of the molding compound is completed.

The first transfer cylinder 154 advances and withdraws with the moving platen 118 and is connected to a pressure source through a manifold passage 158 by a flexible articulating hose (not shown).

Those skilled in the art will also recognize that a toggle-action type press can also be employed within the scope of the present invention. A toggle-action press would facilitate mounting the first transfer cylinder 154 directly to the moving platen 118 without the need for a coaxial arrangement.

The moving platen 118 can also be activated by peripherally mounted multiple cylinders such that the center area of the moving platen 118 is reserved exclusively for mounting the first transfer cylinder 154.

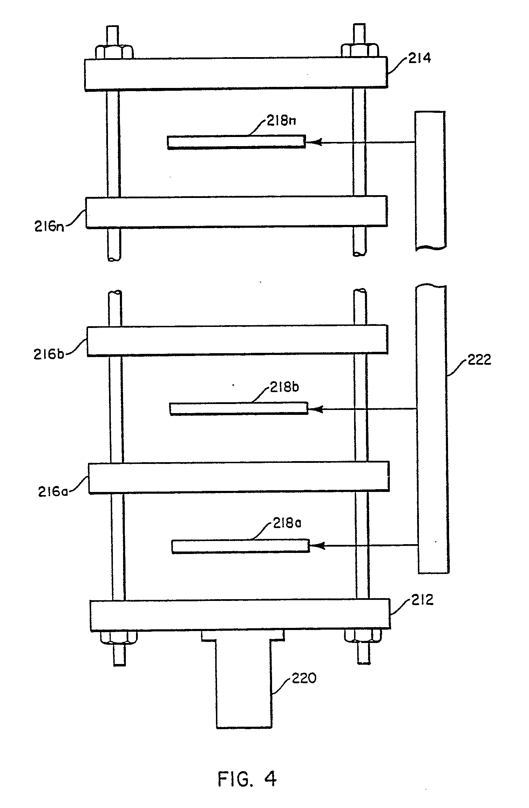

The multiple-mold concept described above may be further extended to molding presses which utilize more than two molds. Such an alternative embodiment of the present invention is illustrated schematically in Fig. 4. The transfer press shown in Fig. 4 includes a fixed head platen 214 and a moving platen 212, the moving platen 212 being translatably disposed with respect to the head platen 214.

A series of floating die plates 216a, 216b, ... 216n are translatably disposed between the moving platen 212 and the head platen 214. A plurality of molds 218a, 218b, ... 218n having one or more cavities formed therein, preferably aperture plate molds of the type described above, are positioned in the press such that one such mold is positioned between the moving platen 212 and the first floating die plate 216a, between each successive pair of floating die plates (for example, between floating die plates 216a and 216b) and between the last floating die plate 216n and the head platen 214.

A closing means 220 such as a hydraulic ram is attached to the moving platen for closing the press by advancing the moving platen 212 toward the head platen 214 such that, in the manner described above, each mold 218a, 218b, ... 218n is sealingly engaged in the press between its corresponding pair of platens.

A transfer means 222 is in flow communication with the cavities of each of the molds 218a, 218b, ... 218n for transferring molding compound thereto. In the preferred embodiment, wherein the molds 218a, 218b, ... 218n are aperture plate molds, the transfer means 222 comprises a Parting Line injection system for transferring preheated thermoplastic molding compound to each mold through an opening formed at the interface between the two aperture plates of each mold.

## Claims

1. A tandem transfer press for encapsulating semiconductor devices, characterized by:
   a) a fixed head platen (14);
   b) a moving platen (18) translatably disposed with respect to said head platen (14);
   c) a floating die plate (20) translatably disposed between said moving platen and said head platen;
   d) a first mold (42, 44, 46, 48) adapted for receiving semiconductor devices mounted on a lead frame, said first mold having one or more cavities formed therein, and being disposed between said moving platen and said floating die plate;
   e) a second mold (52, 54, 56, 58) adapted for receiving semiconductor devices mounted on a lead frame, said second mold having one or more cavities formed therein, and being disposed between said floating die plate and said head platen;
   f) closing means (36, 38) attached to said moving platen for closing the press by advancing said moving platen toward said head platen such that said first mold is sealingly engaged between said moving platen and said floating die plate and said second mold is sealingly engaged between said floating die plate and said head platen; and
   g) first and second transfer means (47, 50, 51, 60, 61, 63) in flow communication with said cavities of said first and second molds respectively for transferring molding compound to said cavities of said first and second mold respectively when said press is closed.

2. The tandem transfer press according to claim 1 characterized in that said first and second molds are aperture plate molds.

3. The tandem transfer press according to claim 1 characterized in that said first mold is an aperture plate mold comprising a bottom mold half (42) mounted on the upper surface of said moving platen (18) and having a runner/gate network (43) formed therein, a top mold half (44) mounted on the lower surface of said floating die plate, and a pair of removable aperture plates (46, 48) disposed between said bottom and said top mold halves, said aperture plates defining a plurality of cavities, each of said cavities being in flow communication with said runner/gate network when said press is closed, each of said cavities having a semiconductor device mounted on a a lead frame positioned therein.

4. The tandem transfer press according to claim 3 characterized in that said first molding compound transfer means includes a first molding compound transfer cylinder (50) mounted on the lower surface of said moving platen, said first transfer cylinder having a plunger (47) extendable into a first molding compound pot (51) formed in said moving platen, said first molding compound pot being in flow communication with said runner/gate network (43) of said first mold such that when said press is closed and said plunger of said first transfer cylinder is extended into said first pot, thermoplastic molding compound is transferred from said first pot to said cavities of said first mold via said runner/gate network of said first mold.

5. The tandem transfer press according to claim 3 or 4 characterized in that said second mold is an aperture plate mold comprising a bottom mold half (54) mounted on the upper surface of said floating die plate, a top mold half (52) mounted on the lower surface of said head platen and having a runner/gate network (53) formed therein, and a pair of removable aperture plates (56, 58) disposed between said bottom and said top mold halves, said aperture plates defining a plurality of cavities, each of said cavities being in flow communication with said runner/gate network when said press is closed, each of said cavities having a semiconductor device mounted on a lead frame positioned therein.

6. The tandem transfer press according to claim 5 characterized in that said second molding compound transfer means further includes a second molding compound transfer cylinder (60) mounted on the upper surface of said head platen, said second transfer cylinder having a plunger (61) extendable into a second molding compound pot (63) formed in said head platen, said second molding compound pot being in flow communication with said runner/gate network (53) of said second mold such that when the press is closed and said plunger of said second transfer cylinder is extended into said second pot, thermoplastic molding compound is transferred from said second pot to said cavities of said second mold via said runner/gate network of said second mold.

7. The tandem transfer press according to any one of claims 1—5 characterized in that:

said fixedly mounted head platen (14) is part of a frame (16);

said moving platen (18) is slidably mounted on said frame;

said floating die plate (20) is slidably mounted on said frame between said moving platen and said head platen.

8. The tandem transfer according to claim 7 characterized in that said frame comprises a cylinder platen (12), said head platen being fixedly spaced apart from said cylinder platen.

9. The tandem transfer press according to claim 8 characterized in that said closing means comprises an axially-mounted hydraulic ram (148) mounted on said cylinder platen, the piston (150) of said ram extending through said cylinder platen and being attached to said moving platen.

10. A tandem transfer press according to claim 9 characterized in that said first transfer means is a transfer cylinder (154) coaxially mounted within said piston (150).

11. A tandem transfer press according to any previous claim characterized by:

a series of floating die plates (216a, 216n) translatably disposed between said moving platen (212) and said head platen (214);

a plurality of molds (218a, 218n), each mold having one or more cavities formed therein, one such mold being positioned between said moving platen (212) and the first (216a) of said floating die plates in said series, between each successive pair of floating die plates in said series, and between the last (216n) of said floating die plates in said series and said head platen (214); and

transfer means (222) in flow communication with said cavities of each of said molds for transferring molding compound thereto.

12. A tandem transfer press according to claim 11 characterized in that said transfer means comprises means for transferring pre-heated thermoplastic molding compound to each mold through an opening formed at the interface between the two aperture plates of each mold.

**Revendications**

1. Presse à transfert en tandem pour l'encapsulation des dispositifs à semi-conducteurs, caractérisée par:

a) un plateau de tête fixe (14);

b) un plateau mobile (18) déplaçable en translation par rapport audit plateau de tête (14);

c) une plaque de moule flottante (20) déplaça-

ble en translation entre le plateau mobile et ledit plateau de tête;

d) un premier moule (42, 44, 46, 48) adapté à recevoir des dispositifs à semi-conducteurs montés sur un cadre de connecteurs, ledit premier moule ayant une ou plusieurs cavités réalisées à l'intérieur, et étant disposé entre le plateau mobile et ladite plaque flottante;

e) un deuxième moule (52, 54, 56, 58) adapté à recevoir des dispositifs à semi-conducteurs montés sur un cadre de connecteurs, ledit deuxième moule ayant une ou plusieurs cavités réalisées à l'intérieur, et étant disposé entre ladite plaque flottante et ledit plateau de tête;

f) des moyens de fermeture (36, 38) fixés audit plateau mobile pour fermer la presse en déplaçant ledit plateau mobile vers ledit plateau de tête de façon que ledit premier moule soit en appui étanche entre le plateau mobile et ladite plaque flottante et que ledit deuxième moule soit en appui étanche entre la plaque flottante et ledit plateau de tête, et

g) des premiers et deuxièmes moyens de transfert (47, 50, 51, 60, 61, 63) en communication avec lesdites cavités des premier et deuxième moules respectifs pour transférer un mélange de moulage vers lesdites cavités desdits premier et deuxième moules respectifs lorsque ladite presse est fermée.

2. Presse à transfert en tandem selon la revendication 1, caractérisée en ce que lesdits premier et deuxième moules sont des moules à plaques de moulage à ouvertures.

3. Presse à transfert en tandem selon la revendication 12, caractérisée en ce que ledit premier moule est un moule à plaques de moulage à ouvertures comprenant une moitié inférieure de moule (42) montée à la surface supérieure du plateau mobile (18) et comportant un réseau de passages (43) formés à l'intérieur, une moitié supérieure de moule (44) monté à la surface inférieure de ladite plaque flottante, et une paire de plaques amovibles de moulage à ouvertures (46, 48) disposées entre la moitié inférieure et la moitié supérieure de moule, lesdites plaques à ouvertures définissant une pluralité de cavités communiquant chacune avec ledit réseau de passages lorsque la presse est fermée, chacune desdites cavités recevant un dispositif à semi-conducteur monté sur un cadre de connecteurs.

4. Presse à transfert en tandem selon la revendication 3, caractérisée en ce que lesdits premiers moyens de transfert de mélange de moulage comprennent un premier cylindre (50) de transfert de mélange de moulage monté à la surface inférieure dudit plateau mobile, ledit premier cylindre de transfert comportant un piston (47) déplaçable dans un premier réservoir (51) de mélange de moulage disposé sur la plateau mobile, ledit premier réservoir de mélange de moulage communiquant avec ledit réseau de passages (43) dudit premier moule de façon que, lorsque ladite presse est fermée et que ledit piston dudit premier cylindre de transfert se déplace dans ledit premier réservoir, le mélange thermoplastique de moulage soit transféré dudit premier réservoir vers lesdites cavités dudit premier moule au travers dudit réseau de passages dudit premier moule.

5. Presse à transfert en tandem selon la revendication 3 ou 4, caractérisée en ce que ledit deuxième moule est un moule à plaques de moulage à ouvertures comprenant une moitié inférieure de moule (54) montée à la surface supérieure de ladite plaque flottante, une moitié supérieure de moule (52) montée à la surface intérieure dudit plateau de tête et comportant un réseau de passages (53) formés à l'intérieur, et une paire de plaques amovibles de moulage à ouvertures (56, 58) disposées entre la moitié inférieure et la moitié supérieure de moule, lesdites plaques à ouvertures définissant une pluralité de cavités communiquant chacune avec ledit réseau de passages lorsque ladite presse est fermée, chacune desdites cavités recevant un dispositif à semi-conducteur monté sur un cadre de connecteurs.

6. Presse à transfert en tandem selon la revendication 5, caractérisée en ce que lesdits deuxièmes moyens de transfert de mélange de moulage comprennent un deuxième cylindre (60) de transfert de mélange de moulage monté à la surface supérieure dudit plateau de tête, ledit deuxième cylindre de transfert comportant un piston (61) déplaçable dans un deuxième réservoir (63) de mélange de moulage disposé sur ledit plateau de tête, ledit deuxième réservoir de mélange de moulage communiquant avec ledit réseau de passages (53) dudit deuxième moule de façon, que lorsque ladite presse est fermée et que ledit piston dudit deuxième cylindre de transfert se déplace dans ledit deuxième réservoir, le mélange thermoplastique de moulage soit transféré dudit deuxième réservoir vers lesdites cavités dudit deuxième moule au travers dudit réseau de passages dudit deuxième moule.

7. Presse à transfert en tandem selon l'une des revendications 1 à 5, caractérisée en ce que:
ledit plateau de tête (14) monté de façon fixe fait partie d'un bâti (16);
ledit plateau mobile (18) est monté coulissant sur ledit bâti;
ladite plaque flottante (20) est montée coulissante sur ledit bâti entre ledit plateau mobile et ledit plateau de tête.

8. Presse à transfert en tandem selon la revendication 7, caractérisée en ce que ledit bâti comprend un plateau à vérin (12), ledit plateau de tête étant espacé d'une distance fixe par rapport audit plateau à vérin.

9. Presse à transfert en tandem selon la revendication 8, caractérisée en ce que lesdits moyens de fermeture comprennent un vérin hydraulique axial (148) monté sur ledit plateau à vérin, le piston (150) dudit vérin traversant ledit plateau à vérin et étant fixé au plateau mobile.

10. Presse à transfert en tandem selon la revendication 9, caractérisée en ce que lesdits premiers moyens de transfert sont formés par un cylindre de transfert (154) monté coaxialement dans ledit piston (150).

11. Presse à transfert en tandem selon l'une des revendications précédentes, caractérisée par:
une série de plaques flottantes (216a, 216n) déplaçables en translation entre ledit plateau mobile (212) et ledit plateau de tête (214);
une pluralité de moules (218a, 218n), chaque moule ayant une ou plusieurs cavités réalisées à l'intérieur, un tel moule étant placé entre ledit plateau mobile (212) et la première (216a) desdites plaques flottantes de ladite série, entre chaque paire de plaques flottantes successives de ladite série, et entre la dernière (216n) desdites plaques flottantes de ladite série et ledit plateau de tête (214); et
des moyens de transfert (222) en communication avec lesdites cavitée de chacun desdits moules pour leur transférer le mélange de moulage.

12. Presse à transfert en tandem selon la revendication 11, caractérisée en ce que lesdits moyens de transfert comprennent des moyens pour transférer un mélange thermoplastique de moulage préchauffé à chaque moule au travers d'un trou formé à l'interface entre les deux plaques de moulage à ouvertures de chaque moule.

**Patentansprüche**

1. Eine Tandemtransferpresse für das Auskapseln von Halbleitern, gekennzeichnet durch:
a) eine feste Kopfpalette (14),
b) eine bewegliche Palette (18), verschieblich angeordnet bezüglich der genannten Kopfpalette (14),
c) eine schwimmende Formplatte (20), verschieblich angeordnet zwischen der genannten beweglichen Palette und der genannten Kopfpalette,
d) eine erste Form (42, 44, 46 48), ausgebildet zur Ausbildung von auf einem Führungsrahmen angeordneten Halbleitern, wobei die genannte erste Form eine oder mehrere Hohlräume aufweist und zwischen der genannten beweglichen Palette und der genannten schwimmenden Formplatte angeordnet ist,
e) eine zweite Form (52, 54, 56, 58), ausgebildet zur Aufnahme von auf einem Führungsrahmen angeordneten Halbleitern, wobei die genannte zweite Form eine oder mehrere Ausnehmungen aufweist und zwischen der genannten schwimmenden Formplatte und der genannten Kopfpalette angeordnet ist,
f) Verschließmitteln (36, 38), verbunden mit der genannten beweglichen Palette zum Schließen der Presse durch Verlagern der genannten beweglichen Palette in Richtung auf die Kopfpalette derart, daß die genannte erste Form abdichtend zwischen der genannten beweglichen Palette und der genannten schwimmenden Formplatte erfaßt wird und die genannte zweite Form abdichtend zwischen der genannten schwimmenden Formplatte und der genannten Kopfpalette erfaßt wird, und

g) erste und zweite Transfermittel (47, 50, 51, 60, 61, 63) in Durchflußkommunikation mit den genannten Hohlräumen der genannten ersten bzw. zweiten Formen zwecks Transfer von Gußmasse in die Hohlräume der genannten ersten bzw. zweiten Form, wenn die Presse geschlossen ist.

2. Eine Tandemtransferpresse nach Anspruch 1, dadurch gekennzeichnet, daß die ersten und zweiten Formen durchbrochene Plattenformen sind.

3. Eine Tandemtransferpresse nach Anspruch 1, dadurch gekennzeichnet, daß die genannte erste Form eine durchbrochene Plattenform ist mit einer Bodenformhälfte (42), montiert auf der Oberseite der genannten beweglichen Palette (18) und mit einem Einlaufbrückennetz (43) versehen, mit einer oberen Formhälfte (44), montiert an der unteren Fläche der genannten schwimmenden Formplatte, und mit einem Paar von entfernbaren Durchbruchplatten (46, 48), die zwischen der genannten unteren und der genannten oberen Formhälfte angeordnet sind, wobei die genannten Druchbruchplatten eine Mehrzahl von Hohlräumen begrenzen, von denen jeder in Durchflußkommunikation mit dem Eingußbrückennetz steht, wenn die genannte Presse geschlossen ist, und wobei jeder der genannten Hohlräume einen auf einem darin positionierten Führungsrahmen montierten Halbleiter enthält.

4. Eine Tandemtransferpresse nach Anspruch 3, dadurch gekennzeichnet, daß die genannten ersten Gußmassentransfermittel einen ersten Gußmassentransferzylinder (50) umfassen, montiert in der Unterfläche der genannten beweglichen Palette, wobei der genannte erste Transferzylinder einen in einen ersten in der genannten beweglichen Palette ausgebildeten Gußmassentopf (51) ausfahrbaren Kolben (47) aufweist, wobei der genannte erste Gußmassentopf in Durchflußkommunikation mit dem genannten Einlaufbrückennetz (43) der genannten ersten Form derart steht, daß bei geschlossener Presse und in den genannten ersten Topf ausgefahrenem Kolben des genannten ersten Transferzylinders thermoplastische Gußmasse von dem gennanten ersten Topf in die genannten Hohlräume der genannten ersten Form über das genannte Einlaufbrückennetz der genannten ersten Form transferiert wird.

5. Eine Tandemtransferpresse nach Anspruch 3 oder 4, dadurch gekennzeichnet, daß die genannte zweite Form eine Durchbruchplattenform ist mit einer unteren Formhälte (54), montiert auf der oberen Fläche der genannten schwimmenden Formplatte, mit einer oberen Formhälfte (52), montiert auf der unteren Fläche der genannten Kopfpalette und mit einem darin ausgebildeten Einlaufbrückennetz (53), und mit einem Paar abnehmbarer Durchbruchplatten (56, 58), die zwischen der genannten unteren Formhälfte und der genannten oberen Formhälfte angeordnet sind, welche Durchbruchplatten eine Mehrzahl von Holräumen begrenzen, wobei jeder der genannten Hohlräume in Durchflußkommunikation mit dem genannten Einlaufbrückennetz steht, wenn die Presse geschlossen ist, und wobei jeder der genannten Hohlräume einen auf einem Führungsrahmen positionierten Halbleiter enthält.

6. Eine Tandemtransferpresse nach Anspruch 5, dadurch gekennzeichnet, daß die genannten zweiten Gußmassentransfermittel ferner einen zweiten Gußmassentranszylinder (60) umfassen, montiert auf der oberen Fläche der genannten Kopfpalette, wobei der genannte zweite Transferzylinder einen in einen zweiten, in der genannten Kopfpalette ausgebildeten Gußmassentopf (63) ausfahrbaren Kolben (61) aufweist, welcher zweite Gußmassentopf in Durchflußkommunikation steht mit dem genannten Einlaufbrückennetz (53) der genannten zweiten Form derart, daß bei geschlossener Presse und bei in den zweiten Topf ausgefahrenem Kolben des genannten zweiten Transferzylinders thermoplastische Gußmasse von dem genannten zweiten Topf in die genannten Hohlräume der genannten zweiten Form über das genannte Einlaufbrückennetz der genannten zweiten Form transferiert wird.

7. Eine Tandemtransferpresse nach einem der Ansprüche 1 bis 5, dadurch gekennzeichnet, daß

die genannte festmontierte Kopfpalette (14) Teil eines Rahmens (16) ist,

die genannte bewegliche Palette (18) gleitbeweglich auf dem Rahmen montiert ist,

die genannte schwimmende Formplatte (20) gleitbeweglich auf dem Rahmen zwischen der genannten beweglichen Palette und der genannten Kopfpalette montiert ist.

8. Eine Tandemtransferpresse nach Anspruch 7, dadurch gekennzeichnet, daß der genannte Rahmen eine Zylinderpalette (12) umfaßt, wobei die genannte Kopfpalette in festem Abstand von der genannten Zylinderpalette angeordnet ist.

9. Eine Tandemtransferpresse nach Anspruch 8, dadurch gekennzeichnet, daß die Verschließmittel einen axial montierten hydraulischen Stempel (148) umfassen, montiert auf der genannten Zylinderpalette, wobei der Kolben (150) des genannten Stempels sich durch die genannte Zylinderpalette erstreckt und mit der genannten beweglichen Palette verbunden ist.

10. Eine Tandemtransferpresse nach Anspruch 9, dadurch gekennzeichnet, daß die genannten ersten Transfermittel einen Transferzylinder (154) umfassen, koaxial montiert innerhalb des genannten Kolbens (150).

11. Eine Tandemtransferpresse nach einem der vorangehenden Ansprüche, gekennzeichnet durch

eine Serie von schwimmenden Formplatten (216a, 216n), verschieblich angeordnet zwischen der genannten beweglichen Palette (212) und der genannten Kopfpalette (214),

eine Mehrzahl von Formen (218a, 218n), wobei jede Form mit einer oder mehreren Ausnehmungen versehen ist, wobei eine solche Form zwischen der genannten beweglichen Palette (212) und der ersten (216a) der genannten schwimmenden Formplatten in der genannten Serie angeordnet ist, zwischen jedem aufeinanderfolgenden Paar von schwimmenden Formplatten in der genannten Serie bzw. zwischen der letzten (216n) der genannten schwimmenden Formplatten in der genannten Serie und der genannten Kopfpalette (214) und Transfermittel (222) in Durchflußkommunikation mit den genannten Hohlräumen jeder der genannten Formen für den Transfer von Gußmasse zu jenen.

12. Eine Tandemtransferpresse nach Anspruch 11, dadurch gekennzeichnet, daß die genannten Transfermittel Mittel für den Transfer von vorerhitzter thermoplastischer Gußmasse zu jeder Form durch eine Öffnung umfassen, ausgebildet an der Stoßfläche zwischen den beiden Durchbruchplatten jeder Form.

0 064 455

FIG. 1

FIG. 2

1

FIG. 3

FIG. 4